# FASCICULE DE BREVET EUROPEEN

(11) **EP 0 779 641 B1**
(45) Date de publication et mention de la délivrance du brevet: **22.03.2000**
(21) Numéro de dépôt: 96402635.5
(22) Date de dépôt: 05.12.1996
(51) Int. Cl.: H01H 71/02, H01H 71/08

(54) **Module d'espacement, notamment pour appareil électrique modulaire**
Abstandshaltermodul, insbesondere für modulare elektrische Geräte
Spacermodule, in particular for modular electrical apparatus

(30) Priorité: 14.12.1995 FR 9514860
(43) Date de publication de la demande: 18.06.1997
(73) Titulaire: LEGRAND, F-87000 Limoges (FR); LEGRAND SNC, F-87000 Limoges (FR)
(72) Inventeur: Wadoux, Pierre, 87570 Rilhac-Rancon (FR)
(74) Mandataire: CABINET BONNET-THIRION

(56) Documents cités:
- EP-A- 0 538 149
- DE-B- 1 101 565
- DE-U- 7 044 973
- DE-U- 7 602 660
- US-A- 2 786 162

## Description

La présente invention concerne les appareils modulaires qui sont des appareils électriques, tels que, par exemple, des disjoncteurs ou des coupe-circuit.

Ainsi qu'on le sait, ces appareils électriques modulaires sont destinés à être rapportés côte à côte sur un même support, en pratique un rail de type normalisé, et, se présentant tous sous la forme générale d'une simple plaquette, ils ont tous sensiblement le même contour, seule variant, éventuellement, de l'un à l'autre, leur largeur, ou épaisseur, cette largeur ou épaisseur étant en pratique égale à un même module de base ou à un multiple, entier ou non, de celui-ci.

Leur boîtier comporte donc deux faces principales parallèles, avec, sur sa tranche, une face arrière, deux faces latérales, et une face avant.

Il a déjà été proposé d'interposer entre deux de tels appareils électriques modulaires un module d'espacement.

Il peut s'agir par exemple d'un module inerte, mis en oeuvre pour assurer une solution de continuité dans un alignement, notamment dans le cas où la largeur ou épaisseur de l'un des appareils électriques modulaires concernés n'est pas un multiple entier du module de base.

Mais il peut s'agir également d'un module mis en oeuvre pour favoriser le refroidissement des appareils électriques modulaires entre lesquels il intervient.

Cela est le cas par exemple, dans le modèle d'utilité allemand No 70 44 973.

Dans la demande de brevet allemand No 1 101 565, qui ne concerne pas, elle, un module d'espacement, mais un appareil électrique modulaire, ou, plus exactement, le corps en matière isolante d'un tel appareil électrique modulaire, il est proposé, corollairement, de prévoir, intérieurement, dans l'épaisseur même de ce corps, un cheminement propre au passage d'au moins un fil électrique.

Mais, dans cette demande de brevet allemand No 1 101 565, ce cheminement ouvre sur toute sa longueur sur une même face principale du corps, en sorte qu'il n'est pas à même d'assurer par lui-même le maintien latéral du fil électrique qu'il contient, ce maintien latéral ne pouvant au contraire être assuré que lorsque ce corps est accolé à un autre.

La présente invention a d'une manière générale pour objet une disposition permettant d'assurer ce maintien tout en étant compatible avec une réalisation par moulage.

De manière plus précise, elle a pour objet un module d'espacement du genre destiné à être interposé entre deux appareils électriques modulaires, ce module d'espacement formant, intérieurement, par lui-même, dans son épaisseur, un cheminement propre au passage d'au moins un fil électrique, et étant caractérisé en ce que, sur une partie au moins de sa longueur, le cheminement qu'il forme se trouve défini, latéralement, par des tronçons de paroi, qui appartiennent, en alternance, à l'une ou l'autre de ses faces principales, et en regard de chacun desquels la face principale opposée présente, de manière conjuguée, un ajour de dimensions au moins égales.

En pratique, suivant une forme préférée de réalisation, ce module d'espacement comportant, sur sa tranche, à la manière du boîtier d'un appareil modulaire, une face arrière, deux faces latérales et une face avant, le cheminement qu'il forme suivant l'invention s'étend de l'une à l'autre de ses faces latérales.

Quoi qu'il en soit, ce cheminement permet avantageusement la circulation d'une filerie transversalement par rapport au support de l'ensemble, ce qui facilite l'établissement d'une telle filerie lorsque, par exemple, une liaison électrique est nécessaire entre l'une des faces latérales d'un appareil électrique modulaire et la face latérale opposée d'un appareil électrique modulaire voisin du précédent.

A défaut, le câblage assurant cette liaison électrique doit contourner par en dessous le support des appareils électriques modulaires concernés, en nécessitant alors une intervention difficile dans un environnement encombré.

Si désiré, le module d'espacement suivant l'invention peut également, suivant un autre développement de l'invention, servir de support à un quelconque constituant, et, par exemple, à un voyant.

Par exemple, le cheminement qu'il forme se trouvant défini, suivant sa longueur, au moins dans sa partie médiane, par des parois longitudinales, qui, par exemple, s'étendent transversalement de l'une à l'autre de ses faces principales, en étant sensiblement perpendiculaires à celles-ci, celle de ces parois longitudinales qui s'étend du côté opposé à la face arrière présente, localement, pour le passage de la filerie nécessaire à la desserte de ce constituant, un perçage, à la faveur, par exemple, d'un méplat.

Dans tous les cas, grâce à la disposition suivant l'invention, le ou les fils mis en place dans ce cheminement se trouvent avantageusement maintenus latéralement, avant même que le module d'espacement soit accolé à un quelconque autre appareil.

Les caractéristiques et avantages de l'invention ressortiront d'ailleurs de la description qui va suivre, à titre d'exemple, en référence aux dessins schématiques annexés sur lesquels :
la figure 1 est une vue en perspective d'un module d'espacement suivant l'invention ;
la figure 2 est, suivant la flèche II de la figure 1, une vue en plan illustrant l'implantation de ce module d'espacement entre deux appareils modulaires ;
la figure 3 est, à échelle supérieure, une vue en élévation, de côté, de ce module d'espacement, suivant la flèche III de la figure 1 ;
la figure 4 en est une vue en coupe transversale, suivant la ligne IV-IV de la figure 3 ;
les figures 5 et 6 en sont des vues partielles en coupe transversale, suivant, chacune respectivement, les lignes V-V et VI-VI de la figure 3 ;
la figure 7 en est une vue en coupe longitudinale, suivant la ligne brisée VII-VII de la figure 3 ;
la figure 8 est, avec un arrachement, une vue en élévation, de côté, qui, analogue à celle de la figure 3, se rapporte à une variante de réalisation ;
la figure 9 est une vue partielle en coupe transversale de cette variante de réalisation, suivant la ligne IX-IX de la figure 8 ;
la figure 10 en est une autre vue partielle en coupe transversale, suivant la ligne X-X de la figure 8 ;
la figure 11 en est une autre vue partielle en élévation, de côté, suivant la flèche XI de la figure 9.

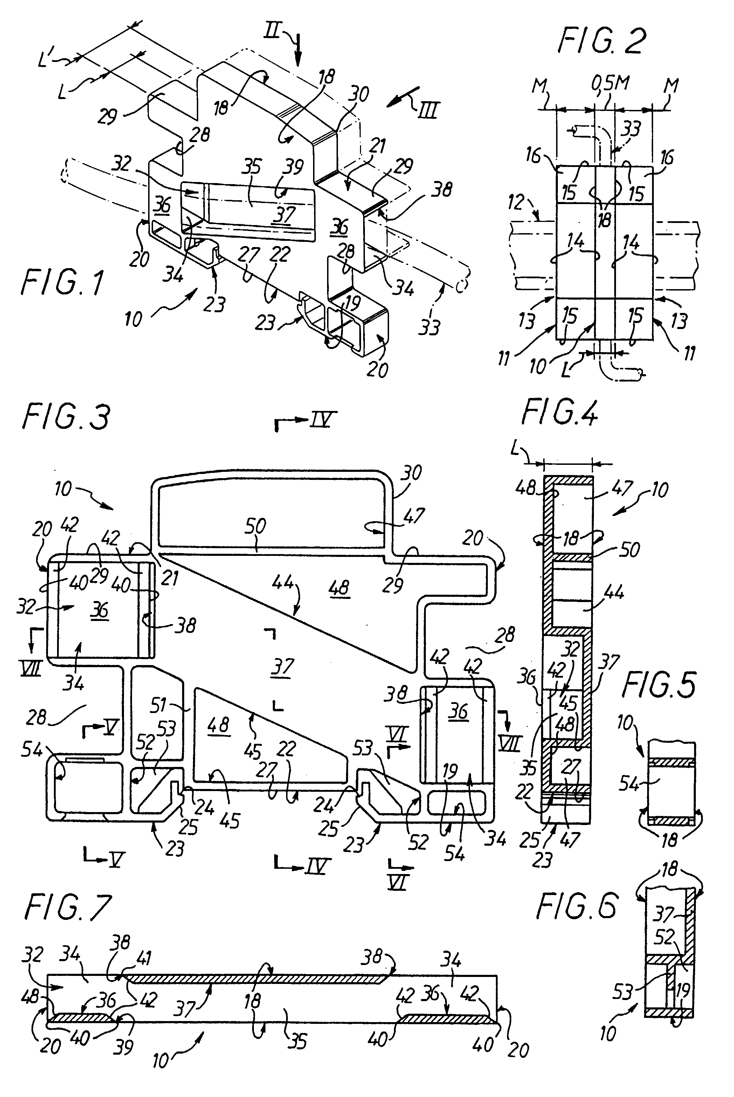

Tel qu'illustré sur la figure 2, le module d'espacement 10 suivant l'invention est destiné à être interposé entre deux appareils modulaires 11, en étant, comme eux, rapporté sur un support 12 commun à tous, en pratique un rail normalisé.

Les appareils modulaires 11 sont par exemple des appareils électriques.

Ces appareils modulaires 11 ne relevant pas de la présente invention, ils ne seront pas décrits en détail ici.

Il suffira d'indiquer qu'ils se présentent chacun sous la forme générale d'une plaquette, et que, transversalement par rapport au support 12, ils présentent tous sensiblement un même contour, seule variant, éventuellement, de l'un à l'autre, leur largeur ou épaisseur, mesurée parallèlement au support 12, cette largeur ou épaisseur étant égale à un module de base M ou à un multiple de celui-ci.

Dans la forme de mise en oeuvre illustrée par la figure 2, les deux appareils modulaires 11 encadrant le module d'espacement 10 suivant l'invention ont, à titre d'exemple, une même largeur, et celle-ci est égale au module de base M.

En pratique, le boîtier 13 de ces appareils modulaires 11 comporte deux faces principales 14 parallèles, avec, sur sa tranche, une face arrière, non visible sur la figure 2, deux faces latérales 15, et une face avant 16.

Comme les appareils modulaires 11, le module d'espacement 10 suivant l'invention se présente sous la forme générale d'une simple plaquette, et son contour est similaire à celui de ces appareils modulaires 11.

A la manière du boîtier 13 de ces appareils modulaires 11, le module d'espacement 10 suivant l'invention comporte donc, d'une manière générale, deux faces principales 18 parallèles, avec, sur sa tranche, une face arrière 19, deux faces latérales 20, et une face avant 21.

Dans la forme de réalisation représentée en traits continus sur les figures 1 à 7, la largeur L de ce module d'espacement 10 mesurée parallèlement au support 12, c'est-à-dire la distance séparant l'une de l'autre ses faces principales 18, est égale à la moitié du module de base M.

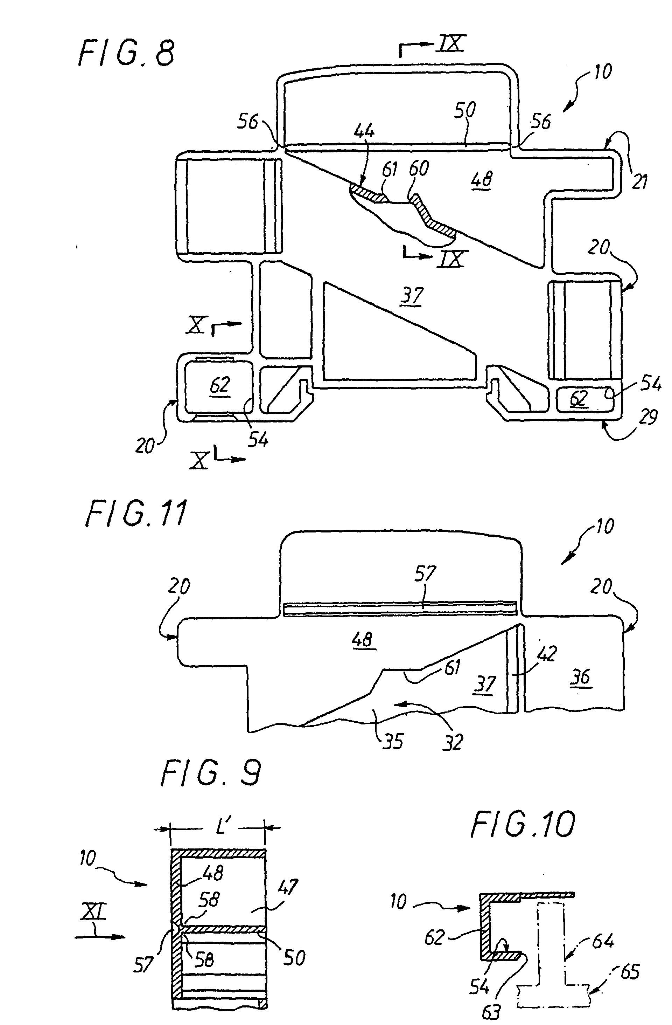

Mais, en variante, et tel que schématisé en traits interrompus sur la figure 1, et tel que représenté en traits continus pour la variante de réalisation des figures 8 à 11, cette largeur peut avoir une valeur L' différente, et, par exemple, être égale au module de base M.

Par sa face arrière 19, le module d'espacement 10 suivant l'invention est adapté à être rapporté, par encliquetage, sur le support 12, à la manière des appareils modulaires 11.

Il comporte, pour ce faire, en bordure d'une encoche 22 de cette face arrière 19 par laquelle il est apte à être engagé sur le support 12 transversalement par rapport à celui-ci, deux pattes élastiquement déformables 23, qui, par un cran 24 précédé d'un chanfrein d'engagement 25, sont aptes à porter sur le support 12, sur la surface inférieure de celui-ci, cependant que, par le fond 27 de l'encoche 22, l'ensemble porte sur la surface supérieure de ce support 12.

Abstraction faite de l'encoche 22, la face arrière 19 est sensiblement plane.

Les faces latérales 20, qui sont globalement parallèles entre elles, en s'étendant sensiblement perpendiculairement à la face arrière 19, sont, elles-mêmes, sensiblement planes, abstraction faite d'une encoche 28 qui, pour des raisons ne relevant pas de la présente invention, les affecte localement.

Pour l'une des faces latérales 20, cette encoche 28 est plus proche de la face arrière 19 que de la face avant 21, tandis que, pour l'autre, elle est plus proche de cette face avant 21 que de la face arrière 19.

Autrement dit, de l'une à l'autre des faces latérales 20, les encoches 28 sont décalées en hauteur par rapport à la face arrière 19.

A la manière des appareils modulaires 11, la face avant 21 du module d'espacement 10 suivant l'invention présente, latéralement, à son raccordement à ses faces latérales 20, deux facettes planes 29, qui, de même niveau par rapport à la face arrière 19, s'étendent sensiblement parallèlement à celle-ci, et, dans sa partie médiane, elle forme, frontalement, entre ces facettes planes 29, une partie saillante 30.

Suivant l'invention, le module d'espacement 10 forme, par ailleurs, intérieurement, par lui-même, dans son épaisseur, un cheminement 32, qui, tel que schématisé en traits interrompus sur les figures 1 et 2, est propre au passage d'au moins un fil électrique 33.

Dans les formes de réalisation représentées, ce cheminement 32 s'étend de l'une à l'autre des faces latérales 20, sensiblement parallèlement aux faces principales 18.

En pratique, ce cheminement 32 débouche à proximité de la face avant 21 pour l'une des faces latérales 20, au-dessus de l'encoche 28 que présente celle-ci, et à proximité de la face arrière 19 pour l'autre des faces latérales 20, au-dessous de l'encoche 28 que comporte cette dernière.

Plus précisément, dans ces formes de réalisation, le cheminement 32 comporte, ainsi, trois tronçons, tous sensiblement rectilignes, à savoir, d'une part, deux tronçons d'extrémité 34, dont chacun s'étend sensiblement perpendiculairement à la face latérale 20 correspondante, et, donc, sensiblement parallèlement à la face arrière 19, et, d'autre part, un tronçon médian 35, qui s'étend en oblique entre les deux tronçons d'extrémité 34, et qui est donc incliné par rapport à la face arrière 19.

Suivant l'invention, le cheminement 32 se trouve défini, latéralement, sur une partie au moins de sa longueur, et, en pratique, sur la totalité de celle-ci, par des tronçons de paroi 36, 37, qui, pour faciliter le moulage de l'ensemble, appartiennent, en alternance, à l'une ou l'autre des faces principales 18, et en regard de chacun desquels la face principale 18 opposée présente, de manière conjuguée, un ajour 38, 39 de dimensions au moins égales.

Il y a ainsi deux tronçons de paroi 36, qui, présents aux extrémités du cheminement 32, en correspondant chacun respectivement aux propres tronçons 34 de celui-ci, appartiennent à l'une des faces principales 18, et, intermédiaire entre les précédents, un tronçon de paroi 37 qui, présent dans la zone médiane du cheminement 32, en correspondant au propre tronçon médian 35 de celui-ci, appartient, lui, à l'autre des faces principales 18.

Corollairement, il y a deux ajours 38, qui, en regard des tronçons de paroi 36, affectent la face principale 18 à laquelle appartient le tronçon de paroi 37, en étant chacun respectivement disposés aux extrémités de celui-ci, et un ajour 39, qui, en regard de ce tronçon de paroi 37, affecte la face principale 18 opposée.

Ainsi, globalement, pour chacun des tronçons 34, 35 du cheminement 32, il n'y a qu'un seul tronçon de paroi 36, 37.

Pour faciliter le moulage, les ajours 38 ont une longueur qui, dans les formes de réalisation représentées, est légèrement supérieure à celle des tronçons de paroi 36.

En outre, pour ménager le ou les fils électriques 33, les bords transversaux d'extrémité 40, 41 des tronçons de paroi 36, 37 ont chacun leur arête interne abattue par un chanfrein 42.

Le cheminement 32 se trouve par ailleurs défini, suivant sa longueur, et au moins dans sa partie médiane, par deux parois longitudinales 44, 45, qui, dans la forme de réalisation représentée, s'étendent transversalement de l'une à l'autre des faces principales 18, en étant sensiblement perpendiculaires à celles-ci.

En pratique, il en est ainsi sur toute la longueur du cheminement 32, suivant le profil même de celui-ci.

Aux extrémités du cheminement 32, les parois longitudinales 44, 45 sont donc sensiblement parallèles à la face arrière 19.

Pour l'une de ces extrémités, la paroi longitudinale 44, qui est celle qui s'étend du côté opposé à la face arrière 19, forme la facette plane 29 correspondante de la face avant 21, tandis que la paroi longitudinale 45, qui est donc celle qui s'étend du côté de la face arrière 19, forme l'un des flancs de l'encoche 28 de la face latérale 20 concernée.

Pour l'autre des extrémités du cheminement 32, la paroi longitudinale 44 forme, à l'inverse, l'un des flancs de l'encoche 28 de la face latérale 20 correspondante, tandis que la paroi longitudinale 45 s'étend à légère distance de la face arrière 19.

Dans les formes de réalisation représentées, les parois longitudinales 44, 45 sont continues, mais il n'en est pas nécessairement ainsi.

D'un côté au moins du cheminement 32, le module d'espacement 10 suivant l'invention comporte, dans les formes de réalisation représentées, au moins un évidement d'allégement 47, à fond 48 borgne appartenant à l'une des faces principales 18.

Il y a ainsi, globalement, dans les formes de réalisation représentées, deux évidements d'allégement 47, disposés chacun respectivement de part et d'autre du cheminement 32, et tous ouvrent sur la même face principale 18, qui, en pratique, est celle comportant des ajours 38 aux extrémités de ce cheminement 32.

Celui de ces évidements d'allégement 47 qui est disposé du côté du cheminement 32 opposé à la face arrière 19 s'étend sur la partie saillante 30 de la face avant 21, et, à la racine de cette partie saillante 30, il est cloisonné par une paroi 50, qui est sensiblement parallèle à la face arrière 19, et qui est destinée à s'opposer à une pénétration trop accentuée d'un éventuel doigt d'épreuve.

L'évidement d'allégement 47 qui est disposé du côté de la face arrière 19, est, lui, cloisonné par une paroi 51, qui, dans les formes de réalisation représentées, est sensiblement perpendiculaire à cette face arrière 19.

Par ailleurs, dans les formes de réalisation représentées, les pattes élastiquement déformables 23 se débattent à la faveur d'évidements 52, qui prolongent latéralement l'encoche 22 de la face arrière 19, en traversant de part en part le module d'espacement 10, et dans chacun desquels intervient, à mi-épaisseur, une nervure triangulaire de raidissement 53.

Enfin, dans les formes de réalisation représentées, le module d'espacement 10 suivant l'invention comporte, également, au raccordement de sa face arrière 19 avec chacune de ses faces latérales 20, un évidement latéral 54.

Dans la forme de réalisation plus particulièrement représentée sur les figures 1 à 7, les évidements latéraux 54 traversent de part en part le module d'espacement 10, comme les évidements 52.

Lorsque le module d'espacement 10 suivant l'invention est en place sur le support 12, il permet que, comme schématisé en traits interrompus sur les figures 1 et 2, un fil électrique 33 le traverse de part en part à la faveur de son cheminement 32, et ce fil électrique 33 peut être mis à profit pour l'établissement d'une liaison électrique entre deux appareils modulaires 11, en intervenant sur deux faces latérales 15 opposées de ceux-ci.

Dans la variante de réalisation représentée sur les figures 8 à 11, la partie saillante 30 de la face avant 21 est susceptible de servir de support, en façade, à un quelconque constituant, non représenté, et, par exemple, à un voyant.

Il peut pour ce faire y être prédécoupé un quelconque perçage, non représenté, si désiré.

Mais, conjointement, pour donner accès au cheminement 32, et ainsi pouvoir extraire de celui-ci la filerie nécessaire à la desserte de ce constituant, la paroi 50 cloisonnant l'évidement d'allégement 47 qui s'étend du côté du cheminement 32 opposé à la face arrière 19 est sécable.

Par exemple, et tel que représenté, elle se rattache, à chacune de ses extrémités, par des zones de moindre épaisseur 56 à la partie saillante 30 de la face avant 21, et, de même, le fond 48 de l'évidement d'allégement 47 qu'elle cloisonne présente, extérieurement, à son droit, une saignée 57 qui réduit l'épaisseur des zones 58 par lesquelles elle se rattache à celui-ci.

Corollairement, la paroi longitudinale 44 qui s'étend du côté opposé à la face arrière 19 présente, localement, dans sa zone médiane, un évidement 60.

Par exemple, et tel que représenté, cet évidement 60 est un perçage affectant un méplat 61 que cette paroi longitudinale 44 présente, localement, parallèlement à la face arrière 19.

Mais, en variante, il peut résulter d'une simple interruption locale de cette paroi longitudinale 44.

Par ailleurs, dans cette variante de réalisation, et ainsi qu'il est visible pour l'un d'eux sur la figure 10, les évidements latéraux 54 présentent un fond 62 borgne, à la manière des évidements d'allégement 47.

En outre, celui de ces évidements latéraux 54 qui est au raccordement de la face latérale 20 dont l'encoche 28 est la plus proche de la face arrière 19 débouche sur cette face arrière 19 par un perçage 63, pour permettre une éventuelle pénétration, à cet endroit, tel que schématisé en traits interrompus sur la figure 10, d'une quelconque des dents 64 d'une barre omnibus 65 en forme de peigne lorsqu'une telle barre omnibus 65 est mise en oeuvre à ce niveau pour l'alimentation des appareils modulaires 11.

Pour le reste, les dispositions sont du même type que celles précédemment décrites.

Mais, bien entendu, la présente invention ne se limite pas aux formes de réalisation décrites et représentées, mais englobe au contraire toute variante d'exécution et/ou de combinaison de leurs divers éléments dans l'étendue des revendications.

## Revendications

1. Module d'espacement, du genre destiné à être interposé entre deux appareils électriques modulaires (11) et formant intérieurement, par lui-même, dans son épaisseur, un cheminement (32) propre au passage d'au moins un fil électrique (33), caractérisé en ce que, sur une partie au moins de sa longueur, le cheminement (32) qu'il forme se trouve défini, latéralement, par des tronçons de paroi (36, 37), qui appartiennent, en alternance, à l'une ou l'autre de ses faces principales (18), et en regard de chacun desquels la face principale (18) opposée présente, de manière conjuguée, un ajour (38, 39) de dimensions au moins égales.

2. Module d'espacement suivant la revendication 1, caractérisé en ce que, comportant, sur sa tranche, à la manière du boîtier (13) d'un appareil modulaire (11), une face arrière (19), deux faces latérales (20), et une face avant (21), le cheminement (32) qu'il forme s'étend de l'une à l'autre de ses faces latérales (20), sensiblement parallèlement à ses faces principales (18).

3. Module d'espacement suivant la revendication 2, caractérisé en ce que le cheminement (32) qu'il forme débouche à proximité de la face avant (21), pour l'une des faces latérales (20), et à proximité de la face arrière (19), pour l'autre de ces faces latérales (20).

4. Module d'espacement suivant la revendication 3, caractérisé en ce que le cheminement (32) qu'il forme comporte trois tronçons (34, 35), tous sensiblement rectilignes, à savoir, d'une part, deux tronçons d'extrémité (34), dont chacun s'étend sensiblement perpendiculairement à la face latérale (20) correspondante, et, donc, sensiblement parallèlement à la face arrière (19), et, d'autre part, un tronçon médian (35), qui s'étend en oblique entre les deux tronçons d'extrémité (34).

5. Module d'espacement suivant la revendication 4, caractérisé en ce que, pour chacun des tronçons (34, 35) du cheminement (32) qu'il forme, il y a un seul tronçon de paroi (36, 37).

6. Module d'espacement suivant l'une quelconque des revendications 1 à 5, caractérisé en ce que les bords transversaux d'extrémité (40, 41) des tronçons de paroi (36, 37) ont chacun leur arête interne abattue par un chanfrein (42).

7. Module d'espacement suivant l'une quelconque des revendications 1 à 6, caractérisé en ce que, d'un côté au moins du cheminement (32) qu'il forme, il comporte au moins un évidement d'allégement (47) à fond (48) borgne appartenant à l'une des faces principales (18).

8. Module d'espacement suivant la revendication 7, caractérisé en ce que tous les évidements d'allégement (47) qu'il comporte ouvrent sur la même face principale (18).

9. Module d'espacement suivant la revendication 8, caractérisé en ce que les évidements d'allégement (47) ouvrent sur la face principale (18) comportant des ajours (38) aux extrémités du cheminement (32) qu'il forme.

10. Module d'espacement suivant l'une quelconque des revendications 1 à 9, caractérisé en ce que, au moins dans sa partie médiane, le cheminement (32) qu'il forme se trouve défini, suivant sa longueur, par deux parois longitudinales (44, 45).

11. Module d'espacement suivant la revendication 10, caractérisé en ce que les parois longitudinales (44, 45) s'étendent transversalement de l'une à l'autre des faces principales (18), et sont sensiblement perpendiculaires à celles-ci.

12. Module d'espacement suivant l'une quelconque des revendications 10, 11, caractérisé en ce que, dans sa zone médiane, celle des parois longitudinales (44) qui s'étend du côté opposé à la face arrière (19) présente localement un évidement (60).

13. Module d'espacement suivant la revendication 12, caractérisé en ce que l'évidement (60) est un perçage affectant un méplat (61) que forme localement la paroi longitudinale (44) concernée.

14. Module d'espacement suivant l'une quelconque des revendications 7 et 12, prises conjointement, caractérisé en ce que, un évidement d'allégement (47) s'étendant du côté du cheminement (32) qu'il forme opposé à la face arrière (19), et cet évidement d'allégement (47) étant cloisonné par une paroi (50) sensiblement parallèle à cette face arrière (19), cette paroi (50) est sécable.

## Patentansprüche

1. Abstandshaltemodul, das dazu bestimmt ist, zwischen zwei modulare elektrische Geräte (11) eingesetzt zu werden, und innen durch sich selbst in seiner Dicke einen Durchgang (32) für die Durchführung mindestens eines elektrischen Drahts (33) bildet, dadurch gekennzeichnet, daß der von ihm gebildete Durchgang (32) mindestens auf einem Teil seiner Länge seitlich durch Wandabschnitte (36, 37) abgegrenzt ist, die abwechselnd zu der einen oder zu der anderen seiner Hauptseiten (18) gehören und gegenüber denen die entgegengesetzte Hauptseite (18) gepaart eine Öffnung (38, 39) von mindestens gleichen Abmessungen aufweist.

2. Abstandshaltemodul nach Anspruch 1, dadurch gekennzeichnet, daß, wenn es auf seiner Schmalseite nach der Art des Gehäuses (13) eines modularen Geräts (11) eine Rückseite (19), zwei Seitenflächen (20) und eine Vorderseite (21) aufweist, der von ihm gebildete Durchgang (32) sich von der einen zur anderen seiner Seitenflächen (20) im wesentlichen parallel zu seinen Hauptseiten (18) erstreckt.

3. Abstandshaltemodul nach Anspruch 2, dadurch gekennzeichnet, daß der von ihm gebildete Durchgang (32) auf der einen der Seitenflächen (20) in Nähe der Vorderseite (21) und auf der anderen dieser Seitenflächen (20) in Nähe der Rückseite (19) ausmündet.

4. Abstandshaltemodul nach Anspruch 3, dadurch gekennzeichnet, daß der von ihm gebildete Durchgang (32) drei im wesentlichen geradlinige Abschnitte (34, 35) aufweist, und zwar einerseits zwei Endabschnitte (34), deren jeder sich im wesentlichen senkrecht zur entsprechenden Seitenfläche (20) und damit im wesentlichen parallel zur Rückseite (19) erstreckt, und andererseits einen Mittelabschnitt (35), der sich schräg zwischen den beiden Endabschnitten (34) erstreckt.

5. Abstandshaltemodul nach Anspruch 4, dadurch gekennzeichnet, daß für jeden der Abschnitte (34, 35) des von ihm gebildeten Durchgangs (32) nur ein Wandabschnitt (36, 37) vorgesehen ist.

6. Abstandshaltemodul nach einem der Ansprüche 1 bis 5, dadurch gekennzeichnet, daß die Stirnränder (40, 41) der Wandabschnitte (36, 37) jeweils eine mit einer Abschrägung (42) versehene Innenkante besitzen.

7. Abstandshaltemodul nach einem der Ansprüche 1 bis 6, dadurch gekennzeichnet, daß es mindestens auf einer Seite des von ihm gebildeten Durchgangs (32) mindestens eine Erleichterungsaussparung (47) mit geschlossenem Boden (48) aufweist, der zu einer der Hauptseiten (18) gehört.

8. Abstandshaltemodul nach Anspruch 7, dadurch gekennzeichnet, daß alle seine Erleichterungsaussparungen (47) auf derselben Hauptseite (18) offen sind.

9. Abstandshaltemodul nach Anspruch 8, dadurch gekennzeichnet, daß die Erleichterungsaussparungen (47) auf der Hauptseite (18) offen sind, die Öffnungen (38) an den Enden des von ihm gebildeten Durchgangs (32) aufweisen.

10. Abstandshaltemodul nach einem der Ansprüche 1 bis 9, dadurch gekennzeichnet, daß der von ihm gebildete Durchgang (32) mindestens in seinem mittleren Bereich gemäß seiner Länge durch zwei Längswände (44, 45) abgegrenzt ist.

11. Abstandshaltemodul nach Anspruch 10, dadurch gekennzeichnet, daß die Längswände (44, 45) sich quer von einer der Hauptseiten (18) zur anderen erstrecken und zu diesen im wesentlichen senkrecht sind.

12. Abstandshaltemodul nach einem der Ansprüche 10, 11, dadurch gekennzeichnet, daß diejenige der Längswände (44), die sich auf der der Rückseite (19) entgegengesetzten Seite erstreckt, in ihrem mittleren Bereich örtlich eine Aussparung (60) aufweist.

13. Abstandshaltemodul nach Anspruch 12, dadurch gekennzeichnet', daß die Aussparung (60) eine Bohrung ist, die in einer Flachstelle (61) vorgesehen ist, die die betreffende Längswand (44) örtlich bildet.

14. Abstandshaltemodul nach einem der Ansprüche 7 und 12 zusammen, dadurch gekennzeichnet, daß, wenn eine Erleichterungsaussparung (47) sich auf der der Rückseite (19) entgegengesetzten Seite des von ihm gebildeten Durchgangs (32) erstreckt und diese Erleichterungsaussparung (47) durch eine zu dieser Rückseite (19) im wesentlichen parallele Wand (50) unterteilt ist, diese Wand (50) ausschneidbar ist.

## Claims

1. A spacer module of the kind intended to be interposed between two modular electrical apparatuses (11) and internally forming by itself in its thickness a duct (32) for the passage of at least one electric wire (33), characterised in that over a part at least of its length the duct (32) that it forms is defined laterally by wall portions (36, 37) which belong alternately to one or other of its main faces (18) and facing each of which the opposite main face (18) has in conjugate manner an opening (38, 39) of dimensions which are at least equal.

2. A spacer module according to claim 1 characterised in that, comprising on its edge in the manner of a casing (13) of a modular apparatus (11), a rear face (19), two lateral faces (20) and a front face (21), the duct (32) that it forms extends from one to the other of its lateral faces (20) in substantially parallel relationship with its main faces (18).

3. A spacer module according to claim 2 characterised in that the duct (32) that it forms opens in the proximity of the front face (21) for one of the lateral faces (20) and in the proximity of the rear face (19) for the other of said lateral faces (20).

4. A spacer module according to claim 3 characterised in that the duct (32) that it forms comprises three portions (34, 35), all substantially rectilinear, namely on the one hand two end portions (34), each of which extends substantially perpendicularly to the corresponding lateral face (20) and therefore substantially parallel to the rear face (19) and, on the other hand, a central portion (35) which extends inclinedly between the two end portions (34).

5. A spacer module according to claim 4 characterised in that, for each of the portions (34, 35) of the duct (32) that it forms, there is a single wall portion (36, 37).

6. A spacer module according to any one of claims 1 to 5 characterised in that the transverse end edges (40, 41) of the wall portions (36, 37) each have their internal edge portion cut away by a chamfer (42).

7. A spacer module according to any one of claims 1 to 6 characterised in that on one side at least of the duct (32) that it forms it comprises at least one lightening opening (47) with a blind bottom (48) belonging to one of the main faces (18).

8. A spacer module according to claim 7 characterised in that all the lightening openings (47) that it comprises open on to the same main face (18).

9. A spacer module according to claim 8 characterised in that the lightening openings (47) open on to the main face (18) comprising apertures (38) at the ends of the duct (32) that it forms.

10. A spacer module according to any one of claims 1 to 9 characterised in that at least in its central part the duct (32) that it forms is defined along the length thereof by two longitudinal walls (44, 45).

11. A spacer module according to claim 10 characterised in that the longitudinal walls (44, 45) extend transversely from one of the main faces (18) to the other and are substantially perpendicular to same.

12. A spacer module according to either one of claims 10 and 11 characterised in that in its central zone that one of the longitudinal walls (44) which extends on the side opposite to the rear face (19) locally has an aperture (60).

13. A spacer module according to claim 12 characterised in that the aperture (60) is a piercing through a flat portion (61) that is locally formed by the longitudinal wall (44) in question.

14. A spacer module according to either one of claims 7 and 12 in combination characterised in that a lightening opening (47) extending on the side of the duct (32) that it forms opposite to the rear face (19) and said lightening opening (47) being partitioned by a wall (50) which is substantially parallel to said rear face (19), said wall (50) can be cut.
